Europäisches Patentamt

European Patent Office

Office européen des brevets

(11) Publication number: **0 195 271**
**A2**

## (12) EUROPEAN PATENT APPLICATION

(21) Application number: **86102205.1**

(22) Date of filing: **20.02.86**

(51) Int. Cl.⁴: **E 03 C 1/04**

(30) Priority: **12.03.85 GB 8506297**

(43) Date of publication of application:
**24.09.86 Bulletin 86/39**

(84) Designated Contracting States:
**AT BE CH DE FR IT LI LU NL SE**

(71) Applicant: **WALKER CROSWELLER & COMPANY
LIMITED
Whaddon Works Cromwell Road
Cheltenham Gloucestershire GL52 5EP(GB)**

(72) Inventor: **Arbon, Dennis Charles
Kilmarth Treyarnon Bay
Nr. Padstow Cornwall, PL28 8JR(GB)**

(72) Inventor: **Wainwright, Alfred William
55 Bafford Approach
Cheltenham Gloucestershire(GB)**

(74) Representative: **Knowles, Audrey Elizabeth
624 Pershore Road
Selly Park Birmingham B29 7HG(GB)**

(54) Water supply installation for ablutionary purposes.

㊉57 A water supply installation for selectively controlling the supply of water to respective discharge outlets (21,22,24,27 and 28) of a plurality of ablutionary appliances consisting of a bath, shower, bidet and separate washbasins (Figures 1 and 2). The installation includes a control unit (35) housing a mixing valve (Figures 5,7,8 and 9) having separate inlet connections to cold and hot water supplies (36) and (37) respectively and an outlet connection to a common manifold (Figures 5,7,8 and 9) having a plurality of outlets each connected to a respective single appliance supply pipe (38,39,40,41 and 42) for delivery of mixed water to the associated discharge outlet (21,22,24,27 and 28).

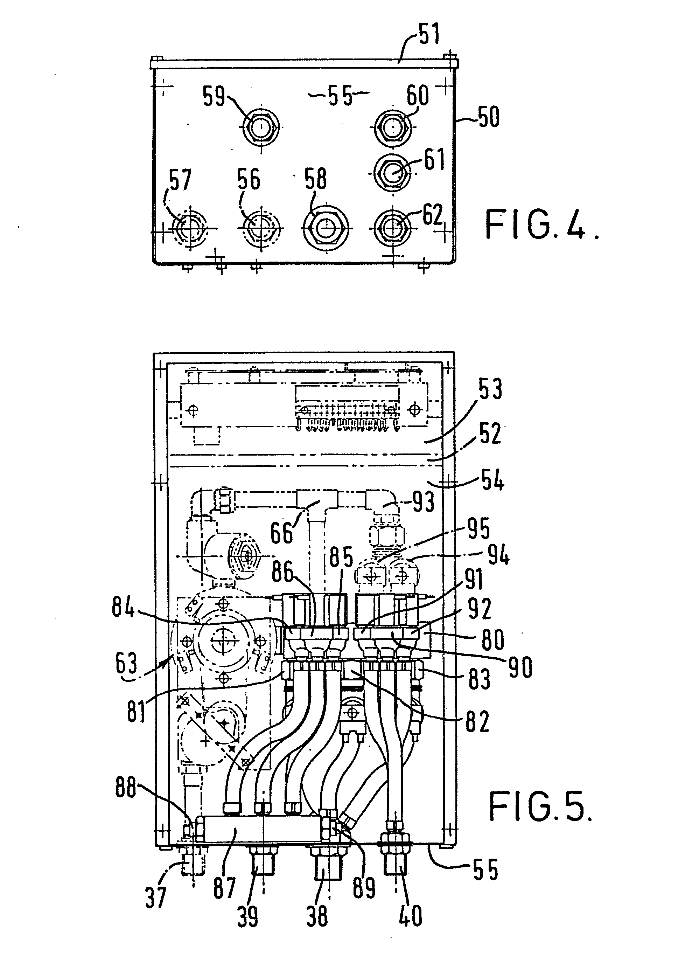

For operating an appliance, a master control panel (29) remote from the control unit (35) is operable by the user to select an appliance and operate control valve means (Figures 5,7,8 and 9) permitting flow of mixed water from the manifold to the associated discharge outlet (21,22,24,27 and 28) through the single supply pipe (28,39,40,41 and 42) respectively. Additionally, individual appliance control panels (32,33 and 34) connected through the main control panel (29) to the control unit (35) permit operation of the associated appliance.

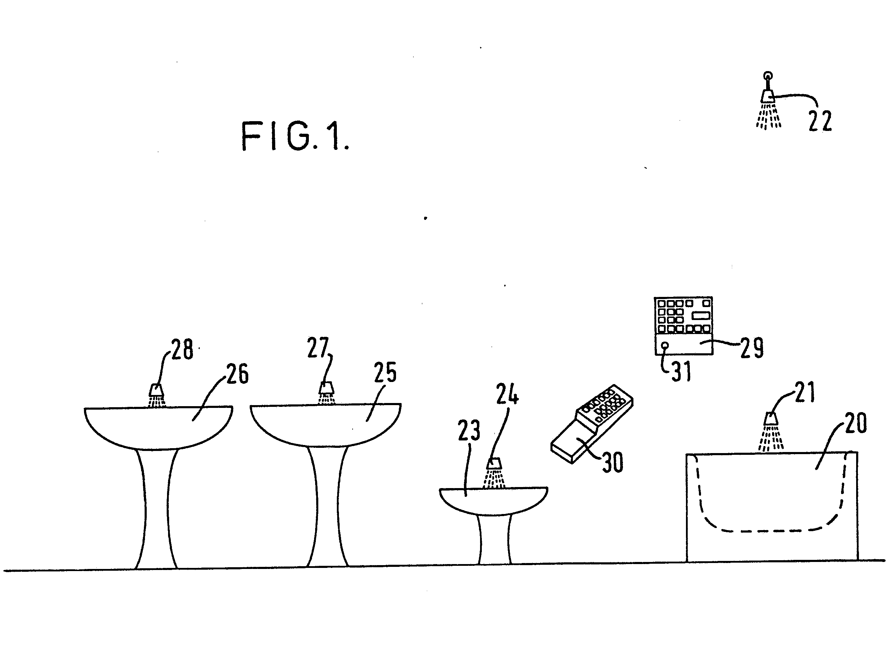

In a further embodiment (Figure 1), the master control panel (29) is responsive to infra-red signals generated by a portable controller permitting remote selection and operation of an appliance.

./...

FIG.3.

WATER SUPPLY INSTALLATION FOR ABLUTIONARY PURPOSES

This invention concerns a water supply installation for ablutionary purposes. The invention has particular, but not exclusive, application for domestic installations for the supply of water and or mixing of hot and cold water in a bathroom or the like where water is to be supplied to a plurality of ablutionary appliances.

Traditionally in a water supply installation, each appliance is plumbed independently to the hot and cold supplies and each appliance is provided with it's own fittings for controlling the supply of the water. The only possible exception to this traditional arrangement is in some shower installations associated with a bath where a common supply of hot and cold water is connected to the bath and by means of a diverter valve, the supply to the bath can be diverted to the shower head or vice versa.

In such a traditional installation, it will be appreciated that each ablutionary appliance, for example, a bath, washbasin or bidet, requires suitable plumbing connections from the main supply of hot and cold water, and each appliance has to have it's own faucet, tap or mixing valve to enable the supply of the water to the appliance to be controlled by the user. In some installations it is necessary to use relatively expensive mixing valves on more than one appliance, and each appliance requires costly faucets, taps or the like fittings. In addition, the extent of the plumbing pipes to each appliance can be considerable.

A number of serious problems do arise with the traditional installation as well as those of cost as just mentioned. One problem is the need to service and maintain the fittings for the water supply to each appliance, such as renewing or replacing parts of a valve. To replace or change only one appliance, then significant plumbing changes may be required disturbing all other appliances at the same location. Certain installations are quite unsuitable for the elderly, infirm or disabled or children. In some cases the faucet, tap or mixing valve cannot be properly operated by the user. There are also considerations arising from the waste of water or the waste of energy where dead-legs of plumbing in the hot water supply pipes are involved.

An object of this invention is to provide a comprehensive installation for ablutionary appliances with full control over the supply of hot and cold water to each appliance by a single control system.

Another object of this invention is to provide an installation for the supply of hot and cold water to a plurality of ablutionary appliances which is controlled by a central control unit.

Other objects of this invention are directed to overcome the problems as afore-mentioned as well as providing an installation well suited for use by the disabled, infirm or other handicapped user.

According to this invention there is provided a water supply installation for a plurality of ablutionary appliances, the installation comprising a master control panel having operable means responsive to actuation by a user to select an appliance and to control the flow of water thereto, a central control unit remote from the master control panel and including a programmable electronic control system connected to the master control panel and responsive to actuation of the operable means by the user, the central control unit housing a mixing valve having inlet connections to hot and cold water supplies and an outlet to a manifold, a discharge outlet associated with each ablutionary appliance connected to the central control unit by a respective single appliance supply pipe, and control valve means for controlling the flow of water from the manifold to each respective appliance supply pipe with the control valve means being electrically operable and responsive to the electronic control system.

In the installation according to this invention, all of the control flow valves are provided in the central control unit to which the hot and cold water supplies are plumbed in and from which a single supply pipe is connected to each appliance. By such an arrangement there are advantages in installation and savings in costs compared with a traditional installation as above referred to. The user can control the selection of the appliance and the supply of water through the master control panel, and the user operable means merely initiates a function of the programmable control system. Thus, the user does not have to actually operate a faucet, valve or tap at each appliance, and this provides considerable advantages in many situations, such as for incapacitated users.

Preferably, the mixing valve in the central control unit is adapted to discharge mixed water to the manifold at a temperature which is predetermined and the mixing of the hot and cold water by the mixing valve is thermostatically controlled.

Accordingly, in the installation, only one mixing valve with thermostatic control is required and mixed water at a predetermined temperature can be delivered to any selected appliance. This feature provides several important advantages, particularly associated with safety and options in the configuration of the ablutionary appliances in an installation.

Conveniently, the mixed water is discharged from the mixing valve to the manifold, and this manifold mounts the electrically operable control valve means which are arranged to control the supply of mixed water to respective appliance supply pipes.

By utilising a common manifold, it is possible to provide for a substantial number of outlets from the manifold for optional connection to the ablutionary appliances in the installation. In this arrangement, changes in the number of ablutionary appliances in the installation can be accomodated either for the original installation or thereafter.

Preferably, the central control unit also includes a cold water manifold to which the inlet of the mixing valve is connected for the supply of cold water to the mixing valve.

By this arrangement, other connections may be made to the cold water manifold to provide for the discharge at an ablutionary appliance of cold water that has bypassed the mixing valve.

The central control unit may also comprise flow or pressure regulators for regulating the flow of water to a respective single appliance supply pipe from the mixed water manifold.

The use of flow or pressure regulators in the connections between the mixed water manifold and the appliance supply pipes enables the installation to be set up for the different requirements of the user and the local conditions of supply pressure.

Conveniently, the programmable control system can provide for a wide range of functions and control options for the installer and/or the user. The functions can include timing the discharge of water demanded, increasing or decreasing the temperature of the mixed water, over-riding or "stopping" any discharge of water, and a visible display of the function can be given to the user.

The master control panel can be remotely operable by the user by providing a sensor on the panel and a portable controller for actuation by the user to transmit signals to the sensor causing responsive actuation of the control system. Typically, such sensor would be responsive to infra-red signals generated by the controller on actuation by the user.

By providing such remotely operated controller, the control function of the system may be operated by a user in a simple manner, and is particularly useful for handicapped or incapacitated users. Indeed, the remote controller may be usefully used for certain operations whilst an appliance is in use, for instance to control the supply of hot water to a bath whilst the user in in the bath.

In the installation, each ablutionary appliance may be provided with an appliance control panel for direct actuation at the appliance location. Such appliance control panels would be connected through the master control panel and be connected to the electronic control system.

The invented installation provides a number of options for the user and to the installer, and the extent of the control and function options are merely dictated by the micro-processor and the programme. These options and the extent of possible programming alternatives will be appreciated, and certain of these are described later herein with reference to the exemplary embodiment(s) of the invention.

The invention will now be described with reference to an exemplary embodiment of an installation as shown in the accompanying drawings wherein:-

FIGURE 1 is a schematic view of the invented installation showing ablutionary appliances arranged for operation at a master control panel or for remote operation with a portable controller;

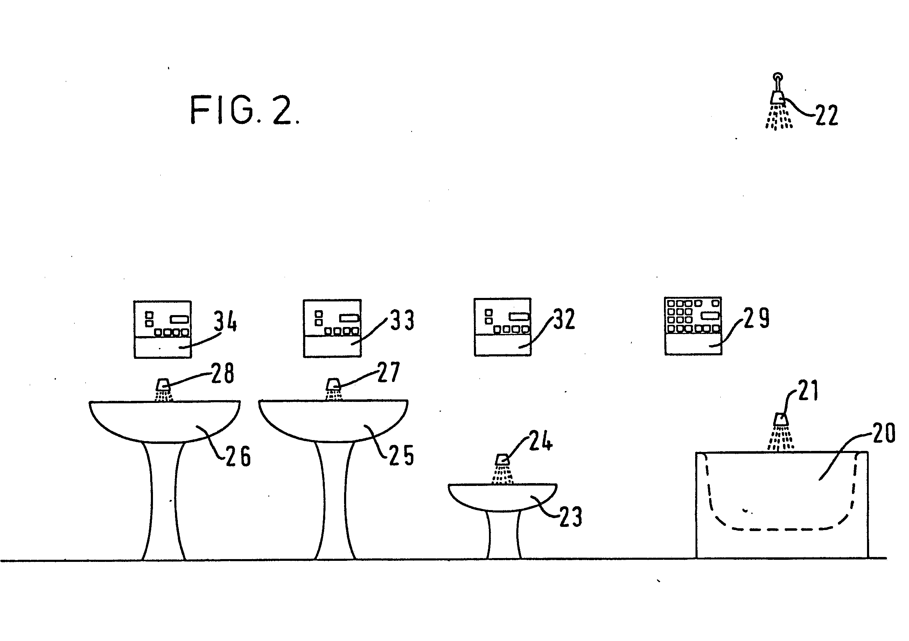

FIGURE 2 is a schematic view similar to Figure 1 showing the same ablutionary appliances arranged for direct operation at the master control panel and at each appliance an appliance control panel;

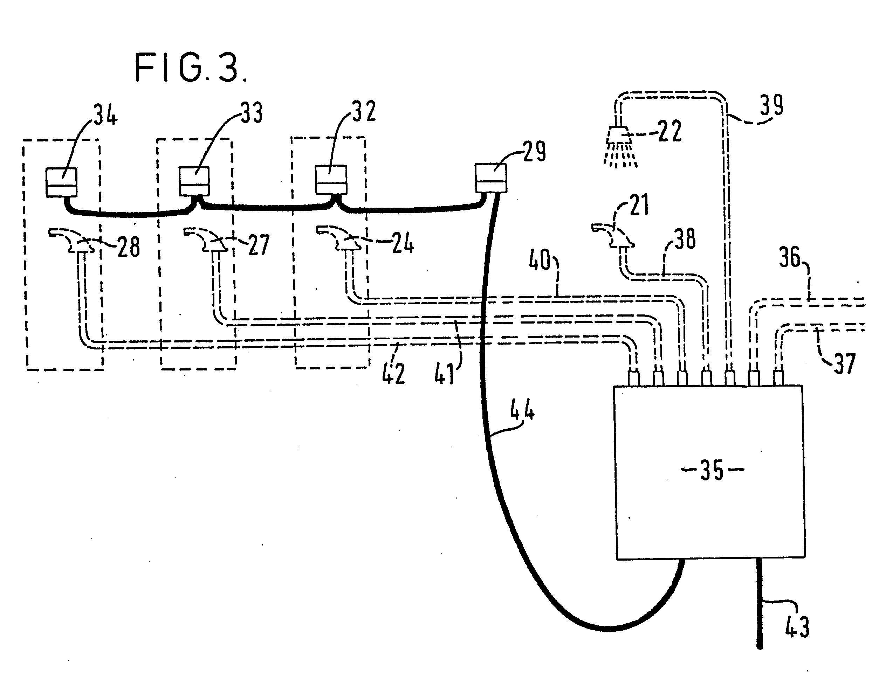

FIGURE 3 is a schematic view of installation shown in Figure 2 but depicting the main plumbing connections and electrical connections to a central control unit;

FIGURE 4 is an end view of the central control unit showing the plumbing connections with the outlet connections for the ablutionary appliances supply pipes being emphasised;

FIGURE 5 is a plan view of the central control unit with the top being removed and certain parts are emphasised to depict the outlet details;

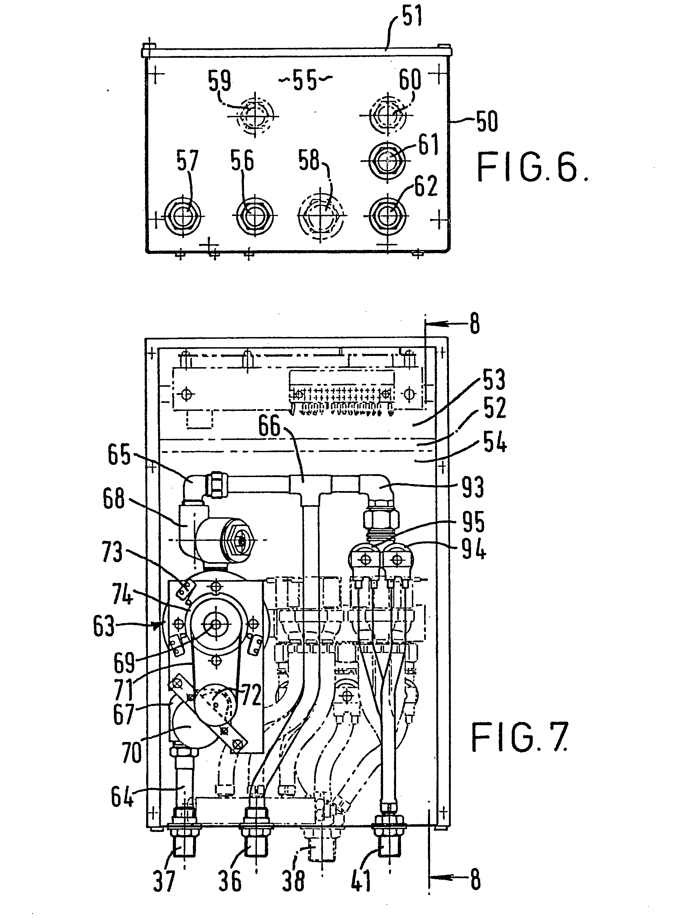

FIGURE 6 is substantially the same view as in Figure 4 but the inlet connections are emphasised;

FIGURE 7 is a view substantially the same as in Figure 5 but other parts including a mixing valve, the hot and cold water inlets are emphasised;

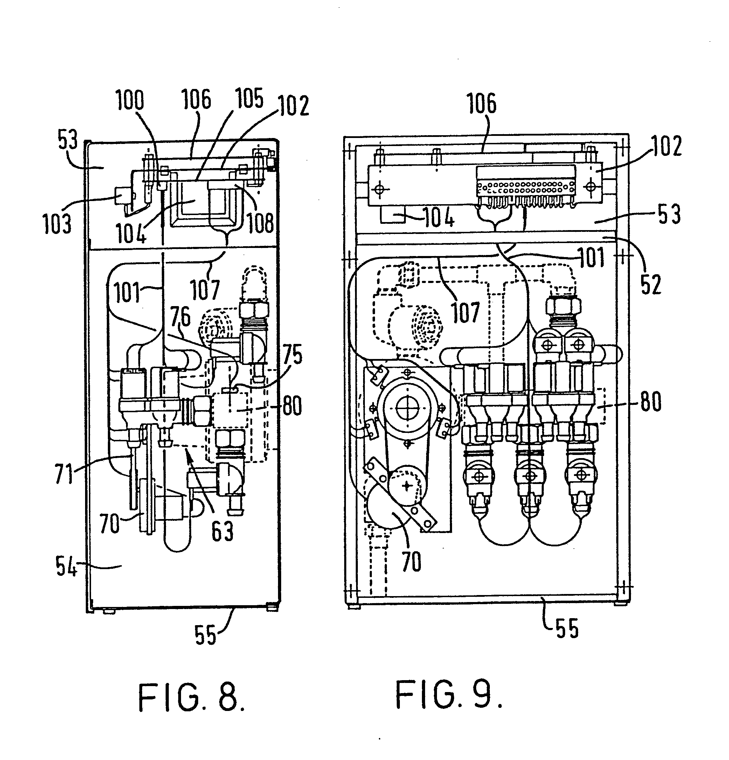

FIGURE 8 is a scrap sectional view of the central control unit in the direction of line 8-8 shown in Figure 7, and shows detail of the electrical and electronic wiring and assembly;

FIGURE 9 is a plan view of the central control unit similar to Figures 5 and 7, but showing other detail of the electrical and electronic wiring and assembly;

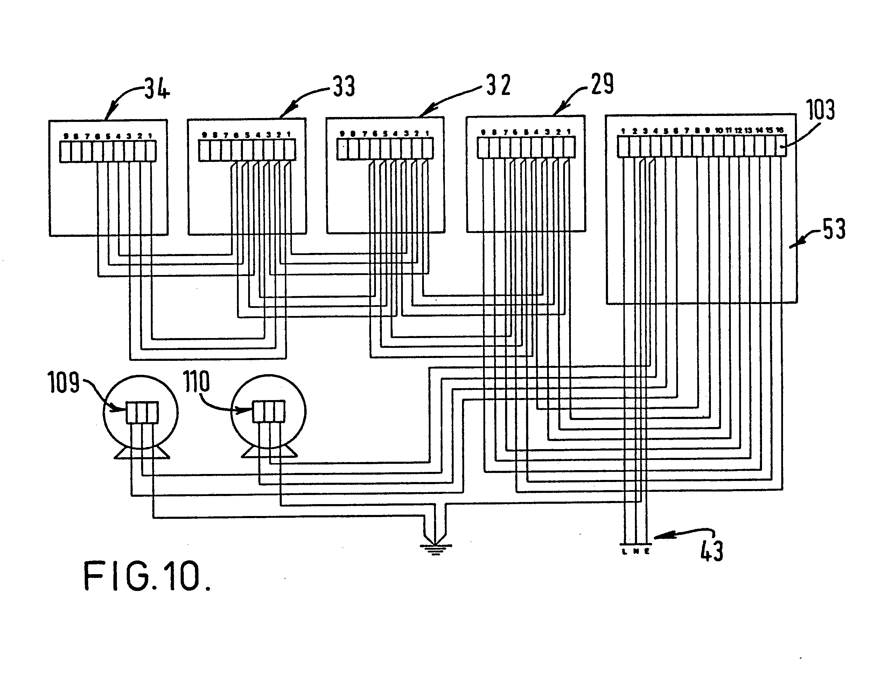

FIGURE 10 is a circuit diagram including the low voltage circuit of the appliance installation as depicted in Figure 2;

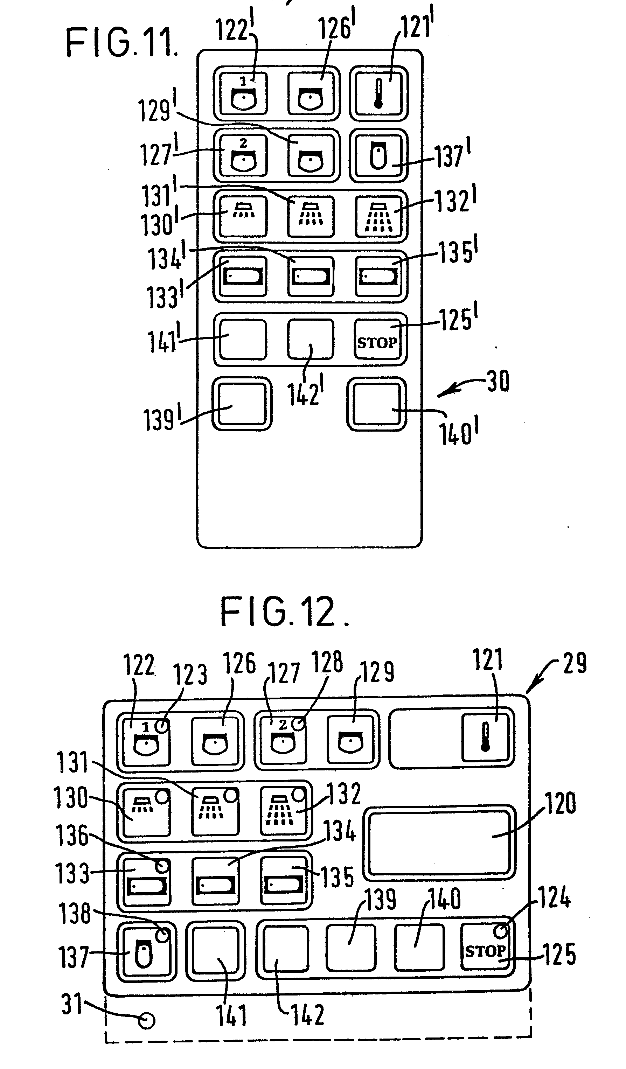

FIGURE 11 is a plan view of the remote controller for use with the installation as depicted in Figure 1;

FIGURE 12 is a plan view of the main control panel arrangement for use with the installations depicted in Figures 1 and 2; and

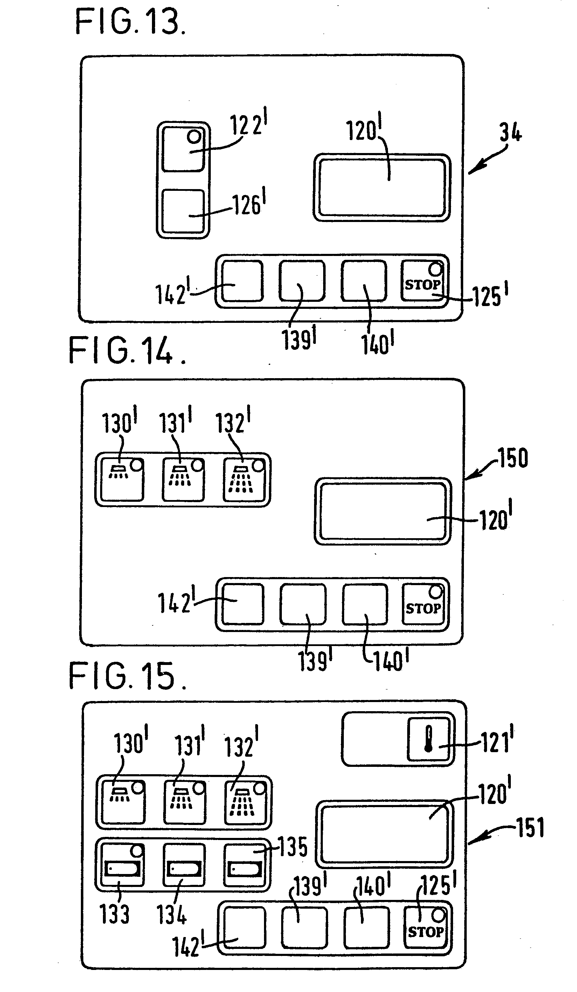

FIGURES 13, 14 and 15 are each plan views of appliance control panels.

The principles of the invention will be described firstly with reference to Figures 1, 2 and 3.

The installations depicted in Figures 1, 2 and 3 are typical for a domestic bathroom requirement in which there is a bath 20 having a discharge spout 21 and an overhead shower spray outlet 22. There is a bidet 23 with a discharge outlet 24, and first and second washbasins 25,26 each having discharge spouts 27,28 respectively.

For the purposes to be described later, each installation of Figure 1 and Figure 2 has a master control panel 29 mounting an array of control buttons. In the installation of Figure 1 there is a remote controller 30 carrying an array of control buttons and the master control panel has a sensor 31 for receiving infra-red signals from the remote controller 30. In the installation of Figure 2, the master control panel 29 does not have the infra-red sensor but carries the array of control buttons. In addition, the bidet 23 has a control panel 32, and the washbasins 25,26 have respective control panels 33,34.

The installation includes a central control unit 35 including inlet connections to a cold water supply 36 and a hot water supply 37. The central control unit 35 also includes outlet connections to the ablutionary appliances through which water is supplied under the control of the central control unit 35. There are single pipe connections 38 and 39 respectively to the bath discharge spout 21 and the shower spray outlet 22. There is a single pipe connection 40 to the bidet outlet 24, and single pipe connections 41 and 42 respectively to the basin spouts 27 and 28.

Mains electrical power is supplied to the central control unit 35 through a lead 43, and a low voltage circuit 44 is connected to the master control panel 29, and to the appliance control panels 32,33 and 34 in the installation of Figures 2 and 3.

It is important to note that each of the outlets to the ablutionary appliances is an open outlet and not provided with any valve at the outlet. In addition, there is only the single pipe connecting each discharge outlet to the central control unit 35. The central control unit is arranged to provide the water as demanded by the user to the required discharge outlet, and the water demanded may be selected through an ablutionary range of temperatures from cold to hot with the temperature of the hot water supplied being controlled by a mixing valve forming part of the central control unit and to be described later herein.

From this initial description of the principle of this invention, it should be understood that the plumbing installation to each ablutionary appliance is merely a single pipe leading from the central control unit, and each appliance does not have a manually controllable discharge outlet. The central control unit is the only plumbing connection required to the hot and cold water supplies, and the central control unit acts as a control centre for the distribution of the water to each appliance.

Generally, the central control unit is for electro-hydraulic control of the supply water (hot and cold) and of the outlet water whether this be mixed or not. The electro-hydraulic operation is controlled by an electronic system using a microprocessor.

The central control unit will now be described with reference also to Figures 4,5,6,7,8 and 9.

The central control unit 35 comprises a box-like enclosure 50 having a removable lid 51 and an internal partition 52 dividing the enclosure into a compartment 53 for the electronic components and a compartment 54 for the electro-hydraulic components and associated pipe connections.

The end wall 55 of the compartment 54 is provided with gland or bulkhead connectors for the plumbing pipes for the inlets and outlets. Glands 56 and 57 are for the cold inlet pipe 36 and the hot inlet pipe 37 respectively. Glands 58 and 59 are for the outlet pipes 38 and 39 respectively connected to the bath and shower. Glands 60,61 and 62 are for the outlet pipes 40, and 41,42 respectively connected to the bidet and the two washbasins.

Mounted in the compartment 54 there is a mixing valve 63 having a connection 64 to the hot inlet pipe 37 and a connection 65 to the cold water inlet 36 through a cold water inlet branch manifold 66. The connections 64 and 65 to the mixing valve 63 each include a respective check valve 67 and 68. The check valves 67 and 68 prevent cross-flow of hot and cold water and can be used to isolate the mixing valve 63 if required.

The mixing valve 63 is of known kind and is for mixing the hot and cold water and thermostatically controlling the temperature of the mixed water. The mixing valve 63 includes a thermoscopic unit (not shown) responsive to changes in the temperature of the water in a mixing chamber of the mixing valve. The thermoscopic unit, in known manner, causes actuation of a proportioning valve (not shown) which varies the relative proportions of the hot and cold water to maintain the temperature substantially constant at the preset value. The mixing valve 63 includes a temperature control spindle 69 which is arranged in known manner to act on the thermoscopic unit to adjust the temperature setting of the unit.

Under the control of the control system to be explained later, the spindle 69 can be rotated by a motor 70 through a belt drive 71 from the motor gearbox 72. When the motor 70 is operated, the preset temperature of the mixed water may be varied to increase or decrease such temperature. Various micro-switches 73 engage the periphery of a cam 74 mounted on the spindle 69 for rotation therewith in order to provide signals to the electronic control system with respect to the movement and position of the spindle 69.

The temperature of the mixed water discharged from the outlet of the mixing valve is sensed by a temperature sensor 75 (see Figure 8) having an electrical connection 76 to the control system. The sensor 75 is arranged in a manifold 80 which extends across the enclosure 50 to which the outlet of the mixed water from the mixing valve 63 is connected. It is from the manifold 80 that the mixed water at the preset or desired temperature is distributed to the various appliance outlets. The discharge of mixed water from the manifold 80 is controlled by several electrically operated control valve means. These control valve means are each solenoid operated valves each having connections to the outlet pipes through the glands as above-mentioned.

As best shown in Figure 5, three solenoid valves 81,82 and 83 control the supply of mixed water from the manifold 80 to the outlet pipe 38 for the bath 20 with the solenoid valves being connected to the gland 38 by three respective connection pipes to provide for a high flow rate to the bath for fast filling.

Three solenoid valves 84,85 and 86 control the outlet supply from the manifold 80 to the outlet pipe 39 for the shower 22. The solenoid valves 84,85 and 86 are respectively connected to a shower outlet manifold 87 by respective connection pipes. The manifold 87 mounts two adjustable flow restrictors 88 and 89 which are associated respectively with the flow of mixed water from the solenoid valves 84 and 85 whilst the flow of mixed water from the other solenoid valve 86 is unrestricted.

Further solenoid valves 90,91 and 92 are provided on the manifold 80 respectively to control the mixed water supply to the bidet pipe 40 and the washbasin pipes 41,42. As previously described each solenoid valve 90,91 and 92 is connected to the respective gland by connection pipes.

A cold water branch 93 leading from the cold water manifold 66 has solenoid valves 94 and 95 lying adjacent the cluster of solenoid valves 90,91 and 92. These solenoid valves 94 and 95 are respectively connected by connection pipes to the glands 61,62 to enable cold water to be supplied to the washbasin pipes 41 and 42 bypassing the mixing valve.

In known manner and as previously mentioned, there are check valves (not referenced) provided in the various pipe connections.

In effect, the solenoid valves as provided in the central control unit are equivalent to the traditional separate faucets, taps or other controls which would be mounted on each ablutionary appliance. The operation of the solenoid valves and other functions of the invented installation are subject to the control system as will now be described with reference particularly to Figures 8,9 and 10.

In the compartment 53 of the central control unit 35 there is a multiple pin plug socket 100 to which a wiring loom 101 for the solenoid valves is connected. A backplate 102 supports a user terminal block 103 including terminals for connection to the mains supply lead 43. The backplate 102 also supports a transformer 104 from which low voltage is conducted to an interface board 105. A microprocessor board 106 is connected to the interface board 105 and is carried behind the back-plate 102.

A wiring loom 107 is connected to the micro-switches 73, the temperature sensor 75 and the motor 70. The loom 107 is connected to a further multiple pin socket 108 which is also supported on the backplate 102.

As an option, and as shown only in Figure 10, the installation may include controls and electrical connections to hot and cold water pumps 109,110 respectively connected to the hot and cold water supply lines 37,36. Such an arrangement may be required in locations where the resident water pressure is low or subject to variations.

The microprocessor is provided with ROM (read only memory) for controlling the programme to be employed in the installation as well as RAM (random access memory) which is available to the user for certain variables which can be commanded by the user. In addition, the firmware includes certain software generated programmes such as timing and clock functions derived from the 50 cycles of the mains power supply.

The constructional and wiring features of the interface and the microprocessor are not described in detail herein and these details are not considered necessary to understand the essential aspects of this invention. The arrangement of the interface and type of microprocessor may be of various kinds depending on the design of the electronics.

The diagrammatic wiring circuit of Figure 10 relates to the installation shown in Figure 2 wherein there is the master or main control panel 29 and the separate control panels 32,33 and 34 respectively for the bidet 23, and for the washbasins 25,26. Each of these control panels is connected to the central control unit 35 from the terminal block 103 on the low voltage side of the circuits. In the installation exemplified with reference to Figure 2, each of the separate appliance control panels 32,33 and 34 provide certain functions whilst all of the functions can be controlled from the the master control panel 29.

On installing the central control unit 35 and connecting the plumbing to the appliances, certain initial adjustments are made. These initial adjustments are primarily to set up the installation and the control system and the control unit. Certain of these will now be described in order to explain some of the special constructional and control features mentioned earlier briefly.

The thermostatic setting for the temperature control by the mixing valve may be checked or adjusted for the normal pre-set ablutionary temperature of about 40 Degrees Celsius.

Adjustments may be made to the two flow restrictors 88 and 89 mounted on the shower manifold 87 associated with the shower outlet to set them at different flow rates less than the main through flow rate. By this adjustment and arrangement, the force of the shower spray can be varied on demand by actuation of the solenoid valves 84,85 and 86 that control the supply of mixed water to the shower outlet manifold 87.

-15-                              0195271

The clock function of the microprocessor which may be displayed on a control panel may be set to local time. In addition, a timed interval for discharge of mixed water from the shower or the bath can be pre-set to give an automatic shut-off after a programmed elapse of time. This timed interval can be adjusted and at the user's option to suit the site conditions.

Further explanations of the performance and functions of the invented installation will now be given with reference to the other Figures depicting the control panels and the remote controller.

The master control panel 29 as shown in detail in Figure 12 carries a number of control buttons, and in the embodiment of Figure 1 with a remote controller 30 the master panel 29 includes a sensor 31 for receiving the infra-red transmission signals from the remote controller 30 when its control buttons are activated.

In the master control panel, there is a window 120 for a digital display of a clock which is running to local time whilst the installation is powered up as would be the normal case. A button 121 is provided, which on actuation whilst mixed water is being discharged, will cause the display in the window 120 of the temperature of the mixed water as derived from the temperature sensor 75 which is responsive to the temperature of the mixed water in the manifold 80 being discharged from the thermostatic mixing valve 63.

The button 122 has an associated marker light 123, and on actuation of this button 122 the marker light 123 is illuminated as well as the marker light 124 associated with the STOP button 125. On actuation of the button 122, mixed water is discharged into the washbasin 26 through the open discharge spout 28 as the actuation of the button 122 causes the solenoid valve 92 to be opened to discharge mixed water from the manifold 80 to the pipe 42. When the mixed water is being discharged, the temperature of the water is displayed in the window 120. The flow can be stopped by actuating the STOP button 125. Additionally, the flow is timed for automatic cessation at the end of a pre-set time which can be user adjusted on initial installation or commissioning or when the system is in the mode for "setting-up".

Button 126 is also associated with the washbasin 26 and controls the supply of cold water to the basin, this cold water being cold water directly from the cold mains supply and not passing through the mixing valve 63. The cold water may be required for potable purposes, such as drinking or teeth cleansing. The cold water is supplied directly to the discharge outlet 28 of the washbasin 26 by the actuation of the solenoid valve 95 to open the valve to the connection to the cold water supply through the pipe 93 from branch manifold 66. On actuation of this button 126, the marker light 123 of button 122 is illuminated as well as the marker light 124 of the STOP button 125. As before described, the STOP button 125 may be actuated to stop the flow of cold water.

For the other washbasin 25 and its discharge outlet 27, a similar arrangement is provided on the control panels by button 127 with marker light 128 and button 129. The operation and function of these buttons for washbasin 25 is like that as just described for washbasin 26 except for that the actuation of the solenoid valves 91 and 94 are controlled by the control system.

The next row of three buttons 130,131 and 132 on the control panel are all concerned with the shower 22 and each button has an associated marker light which is illuminated on operation of the respective button. In addition, when any of these buttons is actuated, the marker light 124 of the STOP button 125 is illuminated and the function of the buttons 130,131 and 132 can be stopped by actuating the STOP button. The button 130 is for causing the discharge of mixed water to the shower at a first low rate of flow as initially set by the flow restrictor 88 associated with the outlet from the mixed water manifold controlled by the solenoid valve 84. The mixed water is discharged at the pre-set temperature controlled by the thermostatic mixing valve, and the water is discharged for the timed pre-set interval with a timed countdown from actuation of the button 130. The flow of water automatically ends when the time interval has elapsed, but the flow can be stopped by the over-riding function of the STOP button 125 if actuated.

The button 131 has a similar function to button 130 except that this button 131 causes the discharge of mixed water at the second and greater rate of flow as initially set by the restrictor 89 associated with the outlet controlled by the solenoid valve 85. The button 132 has a similar function except that on actuation the discharge of mixed water is at the greatest rate of flow through the unrestricted connection from the solenoid valve 86. The functions of the buttons 130,131 and 132 may be such as to cause either concurrent or sequential operation of the respectively associated solenoid valves.

The buttons 130,131 and 132 controlling the discharge of mixed water to the shower can be actuated by the user in any order to change the rate of flow discharge once the discharge has begun.

The buttons 133,134 and 135 of the next row arrayed on the master control panel 29 are all associated with the bath 20 and it's discharge outlet 21. The button 133 has a marker light 136 and this lights as well as marker light 124 of the STOP button 125 is illuminated when any of the buttons 133,134 and 135 are actuated. Actuation of the first button 133 starts the flow of mixed water to the bath 20 through the outlet 21 and once flow has commenced there is a timed countdown which is then displayed in the window 120. This timed discharge is that set in the initial set-up operation but would normally be set to obtain a bath filled to a desired level. The mixed water is discharged at the pre-set temperature by the actuation of the three solenoid valves 81,82 and 83 which are opened by the control system and closed on completion of the countdown time.

The button 134 when actuated provides for a supplementary supply of water to the bath 20 at a temperature which is higher than that of the preset temperature. This function may be called "hot top-up". On actuation of the button 134, the setting of the mixing valve is advanced to a full hot position by operation of the motor 70 which rotates the control spindle 69. Once the mixing valve is so advanced, there is a timed discharge of hot water.

Similarly, the button 135 is arranged to provide a supplementary supply of cold water to the bath 20, and this can be called "cold top-up". On actuation of the

-19-

0195271

button 135, the setting of the mixing valve 63 is reversed by the operation of the motor 70 rotating the control spindle 69 to a cold position. Once the mixing valve is so reversed, there is a timed discharge of cold water to the bath.

The amount of water discharged for either "hot top-up" or "cold top-up" is merely a function of time and is preferably set at 15 seconds.

Following either of these operations which change the setting of the control spindle of the mixing valve and vary the temperature from that pre-set and the norm, the signals derived from the actuation of the micro-switches engaging the cam 74 as it rotates are processed by the control system. There is a time delay purposefully included in the programme to defer the automatic reversion of the mixing valve to the norm setting. This delay is provided to enable the user to repeat the "top-up" quickly if desired without waiting for the motor to advance or reverse the mixing valve setting again. After the delay, the mixing valve is automatically restored to the norm pre-set setting to thermostatically control the temperature of the mixed water such as about 40 Degrees Celsius.

As will be understood, the STOP button 125 may be used at any time to over-ride the functions of the three bath buttons 133,134 and 135.

In the next row of buttons arrayed on the master control panel 29 there is a button 137 with marker light 138 for controlling the discharge of mixed water to the bidet 23 through the discharge spout 24. The actuation of button 137 causes the associated solenoid valve 90 in the central control unit to be opened. As with the other buttons, when the bidet control button 137 is actuated, the marker light 124 of the STOP button 125 is illuminated, and the STOP button 125 can be used to over-ride and stop the discharge of water from the bidet spout 24. For the discharge of water from the bidet there is a timed countdown, and the temperature of the water being discharged is displayed in the window 120 in a similar manner as for the washbasins.

The buttons 139 and 140 adjacent to the STOP button 125 are respectively for increasing or decreasing the temperature of the mixed water when mixed water is being discharged. Actuation of these buttons causes the motor 70 to rotate the control spindle 69 of the mixing valve to increase or decrease the temperature. This change is monitored by the signals from the micro-switches 73 and after any actuation of either button 139 or 140, the control system will pause for about 15 seconds before automatically returning the mixing valve control spindle to the pre-set position.

Two spare or void buttons 141 and 142 are provided on the master control panel 29. These buttons may be additional functions required in the installation. Typical functions may include the automatic operation of a waste outlet valve associated with an appliance or all appliances or for the automatic operation of a flush valve for a toilet (not shown).

The master control panel may have internal switches for use in the initial setting up of the installation and the control system, and these may be for selecting priority order of discharge, for instance first to washbasin 26 in preference to washbasin 25.

Generally, the control system allows both washbasins to operate separately provided that the same temperature for mixed water is selected for each basin. However, for certain other appliances, a flow cannot be selected until certain other discharge flows have ceased. The control system may be designed by its programme t permit discharge simultaneously at more than one outlet.

For an installation as depicted in Figure 1, the operation of the master control panel 29 can be remotely controlled by the controller 30.

The controller 30 is a battery operated device to generate encoded infra-red signals which are received by the sensor 31 on the master panel when the controller is actuated by the user and pointed generally in the direction of the master panel. The controller would be water-tight and have a low voltage battery inside to power the device. There is no display panel nor marker lights on the controller, but the buttons thereon correspond to the equivalent buttons on the master control panel.

For convenience of understanding, the control buttons on the controller 30 are each given references the same as those equivalent buttons on the master control panel. As will be understood, on actuation of any of the buttons of the controller 30 (excluding the two void buttons 141' and 142') the same function as previously explained will be obtained for the user as the controller signal is processed to operate the control system.

With reference to Figure 13, this shows a control panel 34 for the installation as depicted in Figure 2. The control panel 34 is for controlling the operation of the appliance with which it is associated, and is effectively a mere repeat of certain basic control functions that are given in the master control panels 29. The control panels 34 can be pre-set to operate as panels 32 or 33 (Figure 2) by setting a suitable switch or switches (not shown) mounted and connected internally of the panel 34.

The appliance control panel 34 has a display window 120' in which the temperature of the water may be displayed or the time. There is a STOP button 125' and buttons 139' and 140' respectively for decreasing or increasing the temperature of the mixed water discharged. Button 142' is void and could be employed for controlling the waste outlet. Buttons 122' and 126' have the same functions as the correspondingly numbered buttons of the main control panel 29.

Similar appliance control panels 33 and 32 are provided in the installation depicted in Figure 2, each having buttons for controlling the functions at that appliance and for displaying the temperature or time.

With reference to Figure 14, this shows a typical kind of control panel 150 that could be provided as an appliance control panel for the shower 22. As will be understood, the panel 150 has a display window 120' and buttons corresponding to those on the master control panel 29. Such an appliance control panel 150 may be located near the shower fitting for direct actuation by the user.

Similarly and with reference to Figure 15, this shows a typical kind of control panel 151 for an appliance control panel for a combined bath and shower. As will be understood, the panel 151 has a display window 120' and buttons corresponding to those on the master control panel 29 for controlling the discharge of water and other operations associated with either the bath and/or the shower.

Various other kinds or designs of control panels may be employed, and the types and arrangements as described and shown herein are not exhausted.

As will now be appreciated, the invented installation presents a new principle of providing a central control unit for centralised plumbing and control and which acts as a distributor for all water requirements of the ablutionary appliances connected thereto. All of the functions for the supply, and temperature and flow or volume requirements are subject to the central control system whilst the user can still change the temperature or stop the flow as desired.

Although the installation has been described with reference to a bathroom, it will be understood, that the type and kind of ablutionary or other appliance can be varied at will. Indeed, it is not essential for all of the appliances to be located together.

The central control unit provides a relatively simple unit that can be housed or located at any convenient place, and there are no difficult plumbing operations required.

By providing the control system with it's automatic operation, certain problems and aspects of safety can be accomodated within the programme system. In addition, the use of simple push buttons or a remote controller provide many advantages for users who may not be capable of easily operating traditional faucets, taps or valves. The provision of more than one mixing valve or mixing taps or faucets is obviated irrespective of the number of discharge outlets and appliances to be supplied with water.

Other advantages and merits of this invention will be understood by those skilled in this field.

Claims:

1.   A water supply installation for a plurality of ablutionary appliances (20;23;25;26), characterised in that the installation comprises a master control panel (29) having operable means (121;122;125;126;127; 129;130;131;132;133;134;135;137;139;140) responsive to actuation by a user to select an appliance (20;23;25; 26) and to control the flow of water thereto, a central control unit (35) remote from the master control panel (29) and including a programmable electronic control system (103) connected to the master control panel (29) and responsive to actuation of the operable means (121;122;125;126;127;129;130;131;132;133;134;135; 137;139;140) by the user, the central control unit (35) housing a mixing valve (63) having inlet connections (64;65) to hot and cold water supplies (36,37) and an outlet to a manifold (80), a discharge outlet (21;22; 24;27;28) associated with each ablutionary appliance (20;23;25;26) connected to the central control unit (35) by a respective single appliance supply pipe (38; 39;40;41;42), and control valve means (81;82;83;84;85; 86;90;91;92) for controlling the flow of water from the manifold (80) to each respective appliance supply pipe (38;39;40;41;42) with the control valve means (81; 82;83;84;85;86;90;91;92) being electrically operable and responsive to the electronic control system (103).

2.   An installation according to claim 1 characterised in that the mixing valve (63) is adapted to discharge mixed water to the manifold (80) at a predetermined temperature and to maintain the predetermined temperature substantially constant.

3. An installation according to claim 2 characterised in that the mixing valve (63) is thermostatically controlled and pre-set to provide mixed water having any desired predetermined temperature.

4. An installation according to claim 3 characterised in that the mixing valve (63) is electrically operable and responsive to the electronic control system (103) on actuation of the operable means (139,140) of the master control panel (29) by the user to vary the preset temperature of the discharged mixed water.

5. An installation according to any one of the preceding claims characterised in that the central control unit (35) includes flow or pressure regulators (88;89) for regulating the flow of water to a respective single appliance supply pipe (39) from the mixed water manifold (80).

6. An installation according to any one of the preceding claims characterised in that the control valve means (81;82;83;84;85;86;90;91;92) is operable to provide a timed discharge of water at the outlet (21; 22;24;27;28) of the selected appliance (20;23;25;26).

7. An installation according to any one of the preceding claims characterised in that the operable means (125) is responsive to actuation by the user to stop the discharge of water.

8. An installation according to any one of the preceding claims characterised in that the master control panel (29) has a plurality of control buttons (121;122;125;126;127;129;130;131;132;133; 134;135;137; 139;140) for actuation by the user to operate the selected appliance (20,23,25,26).

9. An installation according to any one of the preceding claims characterised in that the master control panel (29) has a sensor (31) responsive to signals generated by a portable controller (30) having a plurality of control buttons (121';122';125';126'; 127';129';130';131';132';133';134';135';137';139';140') for actuation by the user to operate remotely the selected appliance (20;23;25;26).

10. An installation according to claim 9 characterised in that the sensor (31) is responsive to infra-red signals.

11. An installation according to any one of the preceding claims characterised in that the master control panel (29) is connected to respective appliance control panels (32;33;34;150;151) each having a plurality of control buttons (121';122';125';126';130'; 131';132';133';134';135';139';140') for actuation by the user to operate the selected appliance (20;23;25; 26).

12. An installation according to any one of the preceding claims characterised in that the control unit (35) includes a cold water manifold (66) connected in the cold water supply (37) to the mixing valve (63), the manifold (66) having a branch (93) connected to at least one appliance supply pipe (41;42) and having valve means (94;95) responsive to actuation of the operable means (126;126';129;129') by the user for bypassing the mixing valve (63) to supply cold water directly to the appliance discharge outlet (27;28).

13. An installation according to any one of the preceding claims characterised in that each appliance discharge outlet (21;22;24;27;28) is unrestricted.

FIG.1.

FIG. 2.

FIG.3.

FIG.4.

FIG.5.

FIG.6.

FIG.7.

FIG. 8.

FIG. 9.

FIG.10.

FIG.11.

FIG.12.

0195271

8 / 9

0195271

FIG.13.

FIG.14.

FIG.15.